# EUROPEAN PATENT SPECIFICATION

(11) **EP 0 942 056 B1**
(45) Date of publication and mention of the grant of the patent: **28.05.2003**
(21) Application number: 99102841.6
(22) Date of filing: 01.03.1999
(51) Int. Cl.: C09J 7/02, C09J 7/04

(54) **Method for gumming portions of a material in sheet form**
Verfahren zum gummieren von blattförmigem Material
Procédé d'encollage de matériau en feuilles

(30) Priority: 09.03.1998 IT BO980137
(43) Date of publication of application: 15.09.1999
(73) Proprietor: G.D S.p.A., 40133 Bologna (IT)
(72) Inventor: Spatafora, Mario, 40127 Bologna (IT)
(74) Representative: Modiano, Guido, Dr.-Ing.

(56) References cited:
- EP-A- 0 201 960
- GB-A- 1 460 962
- GB-A- 1 475 411

## Description

The present invention relates to a method for gumming portions of a material in sheet form.

In particular, the present invention relates to a method for gumming portions of a material in sheet form which can be mutually coupled by overlapping.

In general, gumming portions of a material in sheet form to be mutually coupled by overlapping is usually performed by applying to at least one of the portions an adhesive substance which is distributed at room temperature and is referenced hereinafter as "cold-setting glue".

The use of said cold-setting glue on the one hand ensures durable gumming but on the other hand does not allow quick setting of the freshly coupled parts, which must be kept stable for a relatively long period required for the drying of said cold glue.

In order to overcome this drawback, it is known to apply to at least one of the portions hot-melt glue, hereinafter referenced as "hot-setting glue", i.e., a glue which can be applied and/or activated by heating and is adapted to ensure immediate setting, and simultaneously apply cold-setting glue to said portion, so as to provide cold-setting glue distribution regions and hot-setting glue distribution regions.

The use of said hot-setting glue, however, entails the drawback that it releases into the air, during the activation or setting step, highly unpleasant fumes and/or vapors..

The aim of the present invention is to provide a method for gumming, by using both of said kinds of glue, portions of a material in sheet form which does not entail the above drawback.

According to the present invention, a method for gumming portions of a material in sheet form is provided comprising the steps of distributing, on said portions, hot-setting glue and cold-setting glue to form, on said portions, respective hot-setting glue distribution regions and cold-setting glue distribution regions; said method being characterized in that said hot-setting glue and said cold-setting glue are distributed so that each cold-setting glue region is shaped so as to enclose at least one hot-setting glue region.

The present invention is herewith described with the aid of the accompanying drawings, which illustrate some non-limitative embodiments thereof and wherein:
Figure 1 is a schematic perspective view of a preferred embodiment of a gumming unit which provides the method according to the present invention; and
Figures 2, 3 and 4 are views of three further embodiments of the unit of Figure 1.

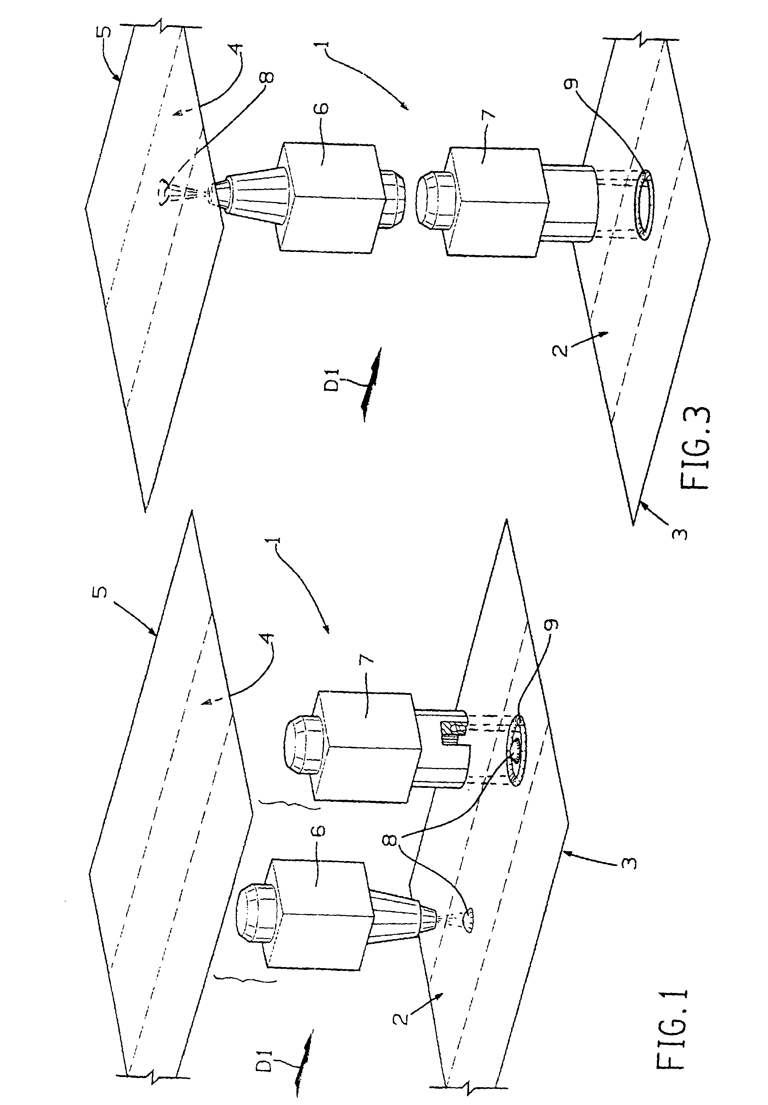

With reference to Figure 1, the reference numeral 1 designates a gumming unit adapted to distribute hot-setting glue and cold-setting glue on a central portion or band 2 of a sheet 3, which is fed by a conveyor, not shown, in an advancement direction D1.

The band 2 of the sheet 3 is adapted to be superimposed, by means of conventional coupling means which are not shown, on a central portion or band 4 of a corresponding sheet 5, which is fed by a conveyor, not shown, in said direction D1.

The unit 1 comprises a gumming nozzle 6 which is connected, in a conventional manner not shown, to a reservoir for feeding hot-setting glue in order to distribute hot-setting glue on the band 2, and a gumming nozzle 7, which is connected, in a conventional manner not shown, to a reservoir for feeding cold-setting glue arranged downstream of the nozzle 6 in the advancement direction of the sheet 3 in the direction D1 in order to distribute cold-setting glue on said band 2 so as to form, on said band 2, a hot-setting glue distribution region 8 and a cold-setting glue distribution region 9.

As shown in Figure 1, on the band 2 of the sheet 3 the region 9 is formed by a uniform annular distribution or application of cold-setting glue which encloses a spot 8 of hot-setting glue.

According to further embodiments, not shown, the spot 8 of hot-setting glue and the region 9 of cold-setting glue are provided on both of the bands 2 and 4 to be superimposed or only on the band 4 of the sheet 5.

As a consequence, the unpleasant fumes produced by the hot-setting glue cannot diffuse into the air, since the annular application of cold-setting glue that constitutes the region 9, as a consequence of the coupling of the sheet 3 to the sheet 5, shields the spot 8 of hot-setting glue, preventing the vapors of said hot-setting glue from reaching the environment during its activation and setting.

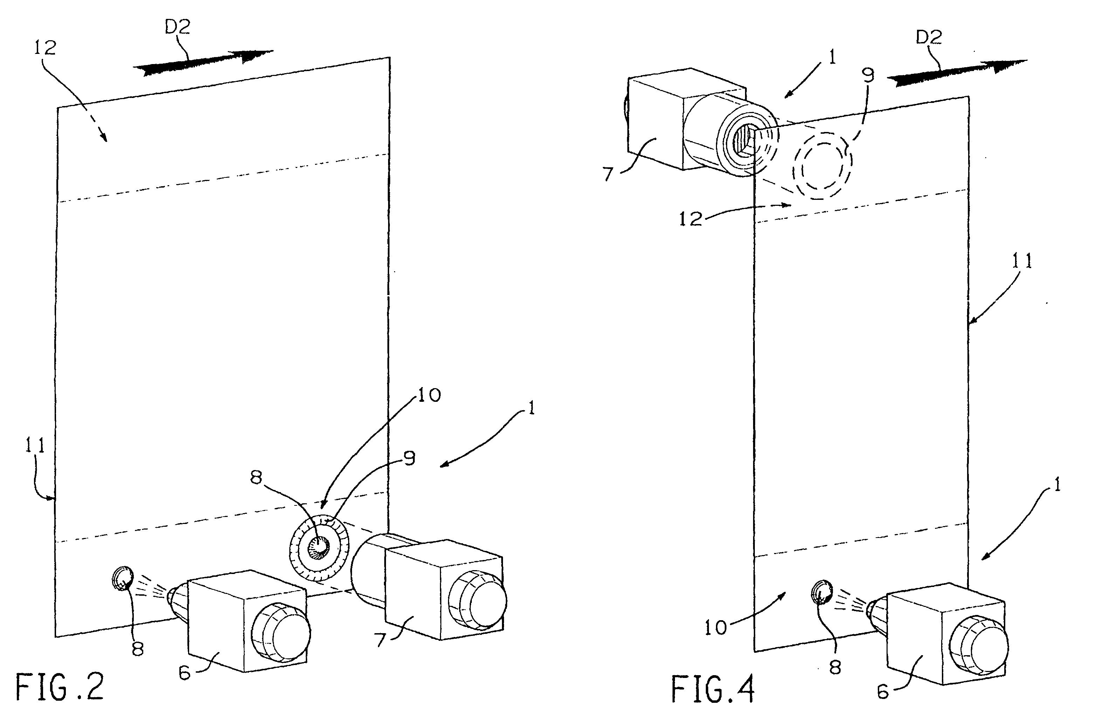

In the further embodiment shown in Figure 2, the distribution of the hot-setting glue and of the cold-setting glue on the part of the gumming nozzles 6 and 7, with a region 9 which encloses a spot 8 of hot-setting glue, is formed on a lateral portion or flap 10 of a sheet 11, which is fed by a conveyor, not shown, in an advancement direction D2 and can be used, for example, to form a tubular wrapping by superimposing the flap 10 on a respective flap 12 of said sheet 11.

According to further embodiments which are not shown, the hot-setting glue spot 8 and the cold-setting glue region 9 are formed on both flaps 10 and 12 of the sheet 11 to be superimposed or only on the flap 12 of said sheet 11.

In the further embodiments shown respectively in Figures 3 and 4, the hot-setting glue is distributed by the nozzle 6 only on the band 4 of the sheet 5, or only on the flap 10 of the sheet 11, while the cold-setting glue is distributed by the nozzle 7 only onto the band 2 of the sheet 3 or only on the flap 12 of the sheet 11. In this manner, by superimposing the band 2 on the band 4, or the flap 10 on the flap 12, a cold-setting glue region 9 encloses a spot 8 of hot-setting glue.

The disclosures in Italian Patent Application No. BO98A000137 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for gumming portions of a material in sheet form comprising the steps of distributing, on said portions (2, 4; 10, 12), hot-setting glue and cold-setting glue to form, on said portions, respective hot-setting glue distribution regions (8) and cold-setting glue distribution regions (9); said method being **characterized in that** said hot-setting glue and said cold-setting glue are distributed so that each cold-setting glue region (9) is shaped so as to enclose at least one hot-setting glue region (8).

2. The method according to claim 1, **characterized in that** said region (9) of cold-setting glue is formed by distributing said cold-setting glue around at least one hot-setting glue region (8).

3. The method according to claim 1, **characterized in that** said portions (2, 4; 10, 12) are formed by respective bands (2, 4) of a first sheet (3) and of a second sheet (5) of said material which can be coupled by overlapping; said regions (8) of hot-setting glue being formed on the band (4) of said second sheet (5) and said regions (9) of cold-setting glue being formed on the band (2) of said first sheet (3).

4. The method according to claim 1, **characterized in that** said portions (2, 4; 10, 12) are formed by respective bands (2, 4) of a first sheet (3) and of a second sheet (5) of said material which can be coupled by overlapping; said regions (8) of hot-setting glue and said regions (9) of cold-setting glue being formed on at least one of said bands (2, 4).

5. The method according to claim 1, **characterized in that** said portions (2, 4; 10, 12) are formed by a first flap (10) and a second flap (12) of a sheet (11) of said material which can be coupled by overlapping; said regions (8) of hot-setting glue being formed on said first flap (10) and said regions (9) of cold-setting glue being formed on said second flap (12).

6. The method according to claim 1, **characterized in that** said portions (2, 4; 10, 12) are formed by a first flap (10) and a second flap (12) of a sheet (11) of said material which can be coupled by overlapping; said regions (8) of hot-setting glue and said regions (9) of cold-setting glue being formed on at least one of said flaps (10, 12).

7. The method according to claim 1, **characterized in that** each one of said regions (8) of hot-setting glue comprises a spot (8) of hot-setting glue; said region (9) of cold-setting glue comprising a uniform annular distribution (9) which encloses at least one of said hot-setting glue spots (8).

## Patentansprüche

1. Verfahren zum Gummieren von Abschnitten eines blattförmigen Materials mit den Schritten: Verteilen von warmhärtendem Kleber und kalthärtendem Kleber auf den Abschnitten (2, 4; 10, 12), um auf diesen Abschnitten jeweils Warmkleberbereiche (8) und Kaltkleberbereiche (9) zu bilden; wobei das Verfahren **dadurch gekennzeichnet ist, daß** der warmhärtende Kleber und der kalthärtende Kleber so verteilt werden, daß jeder Kaltkleberbereich (9) so geformt ist, daß er zumindest einen Warmkleberbereich (8) einschließt.

2. Verfahren nach Anspruch 1, **dadurch gekennzeichnet, daß** der Kaltkleberbereich (9) gebildet wird, indem der kalthärtende Kleber um zumindest einen Warmkleberbereich (8) herum verteilt wird.

3. Verfahren nach Anspruch 1, **dadurch gekennzeichnet, daß** die Abschnitte (2, 4; 10, 12) durch jeweilige Streifen (2, 4) eines ersten Blattes (3) and eines zweiten Blattes (5) des Materials gebildet sind, die durch Überlappen koppelbar sind; wobei die Warmkleberbereiche (8) auf dem Streifen (4) des zweiten Blattes (5) und die Kaltkleberbereiche (9) auf dem Streifen (2) des ersten Blattes (3) gebildet werden.

4. Verfahren nach Anspruch 1, **dadurch gekennzeichnet, daß** die Abschnitte (2, 4; 10, 12) durch jeweilige Streifen (2, 4) eines ersten Blattes (3) und eines zweiten Blattes (5) des Materials gebildet sind, die durch Überlappen koppelbar sind; wobei die Warmkleberbereiche (8) und die Kaltkleberbereiche (9) auf zumindest einem der Streifen (2, 4) gebildet werden.

5. Verfahren nach Anspruch 1, **dadurch gekennzeichnet, daß** die Abschnitte (2, 4; 10, 12) durch eine erste Klappe (10) und eine zweite klappe (12) eines Blattes (11) des Materials gebildet sind, die durch Überlappen koppelbar sind; wobei die Warmkleberbereiche (8) auf der ersten Klappe (10) und die Kaltkleberbereiche (9) auf der zweiten Klappe (12) gebildet werden.

6. Verfahren nach Anspruch 1, **dadurch gekennzeichnet, daß** die Abschnitte (2, 4; 10, 12) durch eine erste Klappe (10) and eine zweite Klappe (12) eines Blattes (11) des Materials gebildet sind, die durch Überlappen koppelbar sind; wobei die Warmkleberbereiche (8) und die Kaltkleberbereiche (9) auf zumindest einer der Klappen (10, 12) gebildet werden.

7. Verfahren nach Anspruch 1, **dadurch gekennzeichnet, daß** jeder der Warmkleberbereiche (8) eine Stelle (8) mit warmhärtendem Kleber umfaßt, wobei der Kaltkleberbereich (9) eine gleichmäßige ringförmige Verteilung (9) umfaßt, die zumindest eine der Warmkleberstellen (8) einschließt.

## Revendications

1. Procédé d'encollage de parties de matériau en feuilles comprenant les étapes de distribution, sur lesdites parties (2, 4 ; 10, 12), de colle durcissable à chaud et de colle durcissable à froid pour former, sur lesdites parties, respectivement des zones de distribution de colle durcissable à chaud (8) et des zones de distribution de colle durcissable à froid (9) ; ledit procédé étant **caractérisé en ce que** ladite colle durcissable à chaud et ladite colle durcissable à froid sont distribuées de façon à ce que chacune des régions de colle durcissable à froid (9) soit formée pour contenir au moins une zone de colle durcissable à chaud (8).

2. Procédé selon la revendication 1, **caractérisé en ce que** ladite zone (9) de colle durcissable à froid est formée par la distribution de ladite colle durcissable à froid autour d'un moins une zone de colle durcissable à chaud (8).

3. Procédé selon la revendication 1, **caractérisé en ce que** lesdites parties (2, 4 ; 10, 12) sont formées par des bandes respectives (2,4) d'une première feuille (3) et d'une seconds feuille (5) dudit matériau, lesquelles peuvent être accouplées par chevauchement ; lesdites zones (8) de colle durcissable à chaud étant formées dans la bande (4) de ladite seconds feuille (5) et lesdites zones (9) de colle durcissable à froid étant formées dans la bande (2) de ladite première feuille (3)

4. Procédé selon la revendication 1, **caractérisé en ce que** lesdites parties (2, 4 ; 10, 12) sont formées par des bandes respectives (2,4) d'une première feuille (3) et d'une seconde feuille (5) dudit matériau qui peuvent être accouplées par chevauchement ; lesdites zones (8) de colle durcissable à chaud et lesdites zones (9) de colle durcissable à froid étant formées sur au moins l'une desdites bandes (2,4)

5. Procédé selon la revendication 1, **caractérisé en ce que** lesdites parties (2,4 ; 10, 12) sont formées par un premier rabat (10) et un second rabat (12) d'une feuille (11) dudit matériau qui peuvent être accouplés par chevauchement ; lesdites zones (8) de colle durcissable à chaud étant formées sur ledit premier rabat (10) et lesdites zones (9) de colle durcissable à froid étant formées sur ledit second rabat (12).

6. Procédé selon la revendication 1, **caractérisé en ce que** lesdites parties (2,4 ; 10, 12) sont formées par un premier rabat (10) et un second rabat (12) d'une feuille (11) dudit matériau qui peuvent être accouplés par chevauchement ; lesdites zones (8) de colle durcissable à chaud et lesdites zones (9) de colle durcissable à froid étant formées sur au moins l'un desdits rabats (10, 12).

7. Procédé selon la revendication 1, **caractérisé en ce que** chacune desdites zones (8) de colle durcissable à chaud comprend un point (8) de colle durcissable à chaud ; ladite zone (9) de colle durcissable à froid comprenant une distribution annulaire uniforme (9) qui comprend au moins un desdits points de colle durcissable à chaud (8).
